**Europäisches Patentamt**

**European Patent Office**

**Office européen des brevets**

(19)

(11) Veröffentlichungsnummer: **0 037 138**
**A2**

(12) # EUROPÄISCHE PATENTANMELDUNG

(21) Anmeldenummer: **81200276.4**

(22) Anmeldetag: **11.03.81**

(51) Int. Cl.³: **C 08 F 220/56**
**C 08 F 6/00, A 01 G 1/00**
**//(C08F220/56, 220/60)**

(30) Priorität: **21.03.80 CH 2250/80**

(43) Veröffentlichungstag der Anmeldung:
**07.10.81 Patentblatt 81/40**

(84) Benannte Vertragsstaaten:
**AT BE DE FR GB IT LU NL SE**

(71) Anmelder: **ISAFLEX AG**
**Spitalstrasse 74**
**CH-8952 Schlieren(CH)**

(72) Erfinder: **Helbling, Gottfried**
**Ringstrasse 22**
**CH-8808 Pfäffikon(CH)**

(74) Vertreter: **Maspoli, Renato A.**
**EGLI PATENTANWÄLTE Horneggstrasse 4**
**CH-8008 Zürich(CH)**

(54) **Verfahren zur Herstellung von wasseraustauschendem, nicht-toxischem Polymermaterial auf Basis Acrylamid/N,N'-Methylenbis-acrylamid.**

(57) Das neue, wasseraustauschende und nicht-toxische Polymermaterial auf Basis von Acrylamid und, N,N'-Methylenbisacrylamid wird in einem speziellen Verfahren erhalten.

Die durch das neue Verfahren bedingten physikalischen Eigenschaften des Polymers erlauben es, dasselbe in wichtigen agrotechnischen Verwendungen einzusetzen.

EP 0 037 138 A2

BEZEICHNUNG
siehe Titelseite

Die hier beschriebene Erfindung betrifft ein Verfahren zur
kontrollierten Copolymerisation von u.a. Acrylamid und von
N,N'-Methylenbisacrylamid zu wasseraustauschenden, nicht-
toxischen Polymermaterialien, die derart erhaltenen Polymermaterialien mit aufgrund der Herstellungsweise genau definierten physikalischen Eigenschaften sowie die Verwendung
des neuen Polymermaterials in der Agrotechnologie.

Die Verwendung von Acrylamiden in Copolymerisationsreaktionen ist bekannt.

Es wird dazu auf Kirk-Othmer, 2nd edition, Vol. 1, pages
282-284 verwiesen. Diese Veröffentlichung enthält eine umfassende Bibliographie zu Acrylamid und zu dessen Verwendung
in Polymeren und Copolymeren.

Eine weitere, zusammenfassende Publikation betreffend Acrylamid sowie dessen Anwendung in Copolymeren ist C.E. Schildknecht: Vinyl and Related Polymers ; John Wiley & Sons, Inc.,
New York.

Auch die Patentliteratur betreffend Copolymere von Acrylamid
ist umfangreich und kann hier nur auszugsweise wiedergegeben
werden:

Die AT-Patentschrift Nr. 349 759 (American Cyanamid Co.)
beschreibt ein Verfahren zur Herstellung von wasserlöslichen
Copolymeren, enthaltend Acrylamid, Styrol, sowie Alkylester
von Acryl- bzw. Methacrylsäure. Das Produkt ist wasserlöslich und auch alle seine Anwendungen beruhen auf die genannte
Eigenschaft.

Die US-Patentschrift Nr. 2 953 546 (to American Cyanamid Co.)
lehrt ein Polymerisationsverfahren für die Copolymerisation
von Acrylamid, Methylolacrylamid, Methacrylamid, N,N'-Methylen-
bisacrylamid, Vinylcarbazol und anderen in flüssigem, nichtwässrigem Milieu, in dem weder die Monomeren noch das Copolymer
löslich sind. Die Erfindung erlaubt wegen des Wegfallens der
Mischphase Lösungsmittel-Gelöstes eine wirtschaftlichere
Produktion des Copolymers. Die Produkte sind immer wasserlöslich (Kolonne 2, erste Zeile)!

Die US-Patentschriften Nr. 4 098 987 und 4 171 418 (beide to
American Cyanamid Co.) beschreiben je ein wasserlösliches
Copolymerisat aus 40 bis 70 Gew.-% Acrylamid und mindestens
30 % anderer, zum Teil auf Acrylsäure basierender Monomere.
Die erfindungsgemäss erhaltenen wasserlöslichen Polyelektrolyte finden Verwendung als kationische oder nicht-ionische
oberflächenaktive Verbindungen.

Der überwiegende Stand der Technik betrifft also die Copolymerisation von Acrylamid zu wasserlöslichen Produkten.

Die wesentlichste Anwendung von Acrylamid in vermutlich
schlecht bis gar nicht wasserlöslichen Copolymerisaten ist
das Handelsprodukt AM-9 ® der American Cyanamid Co. Das
Material ist ein sogenannter chemischer Mörtel: wässrige
Lösungen von hauptsächlich Acrylamid und wenig N,N'-
Methylenbisacrylamid werden zur Abdichtung und Verfestigung von Böden in dieselben injiziert. Die Gelierungszeit
wird hauptsächlich durch die Katalysatormenge kontrolliert.

Keine oder obigen Veröffentlichungen lehrt oder legt nahe
also ein Verfahren zur kontrollierten Copolymerisation von
Acrylamid, von N,N'-Methylenbisacrylamid und eventuell von
weiteren Acrylsäurederivatmonomeren, zu einem festen, wasserunlöslichen, nicht verrottbaren, wasseraustauschenden und
nicht-toxischen Polymermaterial, das zudem ganz spezifische
physikalische Eigenschaften, die aufgrund des neuen Verfahrens erhalten werden, aufweist und das dadurch für
äusserst wichtige agrotechnische Verwendungen geeignet ist.

Die eben genannten Ziele werden durch die hier beschriebene
Erfindung erreicht.

Das erfindungsgemässe Verfahren ist im Patentanspruch 1,
das erfindungsgemässe Produkt im Patentanspruch 8 und die
erfindungsgemässe Verwendung im Patentanspruch 9 definiert.

Die Erfinder/Anmelder haben das spezifische erfindungsgemässe Verfahren in langen Reihen von Versuchen optimiert.
Zur Kontrolle der wichtigsten physikalischen Eigenschaften
des Produktes wurden neue, einfache Untersuchungsmethoden
entwickelt.

Das neue, wasseraustauschende, nicht-toxische Polymermaterial
wird also dadurch erhalten, dass
- Acrylamid und N,N'-Methylenbisacrylamid zusammen in Wasser
  im Gewichtsverhältnis Monomere und Wasser von höchstens
  2:8 gelöst werden,
- gegebenenfalls weitere N-substituierte Acrylamidmonomere
  zugesetzt werden, wobei das obige Gewichtsverhältnis von
  Monomere zu Wasser nicht überschritten wird,
- der Lösung unter Rühren mindestens ein fein verteilter,
  aufgeschlämmter und/oder gelöster Polymerisationsinitiator
  zugesetzt wird,

- die Copolymerisation bei Temperaturen über 50$^o$C durchgeführt wird,

- das Gel granuliert und dann auf einen maximalen Acrylamidmonomergehalt von ≤ 0,1 Gew.-% - bezogen auf das Endprodukt - gewaschen wird und

- das Gelgranulat bei Temperaturen unterhalb 100$^o$C auf einen maximalen Wassergehalt von 12 Gew.-% - bezogen auf das Endprodukt - getrocknet und dabei auspolymerisiert wird.

Im Verfahren können die beiden Hauptmonomeren, d.h. das Acrylamid und das N,N'-Methylenbisacrylamid in Gewichtsverhältnissen zwischen 9:1 bis 99:1 eingesetzt werden. Die Gewichte der eingesetzten Monomere zum Lösungswasser können im Verhältnis 1:9 stehen.

Als Polymerisationsinitiatoren können tertiäre Amine, speziell Triäthanolamin oder 3-Dimethylaminpropionitril eingesetzt werden. Neben diesen organischen Initiatoren können auch anorganische Peroxoverbindungen eingesetzt werden. Das Gesamtgewicht der eingesetzten Monomeren zum Gesamtgewicht der eingesetzten Polymerisationsinitiatoren kann im Verhältnis 9:1 bis 99:1 liegen.

Die Polymerisation wird vorteilhafterweise bei Temperaturen von 70 $\pm$ 5$^o$C durchgeführt.

Das Gelgranulat kann mit vernünftigem Aufwand ohne weiteres bis auf einen Restgehalt von 0,05 Gew.-% - bezogen auf das Endprodukt - Acrylamidmonomer gewaschen werden.

Die Trocknung des Gelgranulats geschieht am besten mit heisser Luft von etwa 95 $\pm$ 5$^o$C. Dadurch wird ein Endprodukt erreicht, das maximal 3 Gew.-% Wasser - bezogen auf das Endprodukt - enthält. Die Erfinder/Anmelder haben Hinweise dafür, dass in diesem Trocknungsschritt die Quervernetzung des Produktes zu Ende geführt wird. Entsprechend erhaltene Gele, die nämlich bei wesentlich tieferen Temperaturen getrocknet werden oder die nur mechanisch abgepresst werden, führen nämlich zu Granulaten mit erheblich verringerter Formbeständigkeit bei Temperaturwechseluntersuchungen.

Das getrocknete Granulat kann anschliessend auf gewünschte Korngrösse gemahlen und ausgesiebt werden. Für Versuche wurden vor allem drei derartige Korngrössen ausgeschieden: G 01 H 0 - 1 mm; G 12 H 1 - 2 mm und G 30 H 2 - 3 mm.

Der Illustration des erfindungsgemässen Verfahrens dient das folgende Beispiel.

Beispiel

In 90 kg Wasser wurden 9,5 kg Acrylamid und 0,5 kg Methylenbisacrylamid gelöst. Erst nach vollständigem Lösen der Monomere wurden 0,4 kg 3-Dimethylaminopropionitril zugegeben. Nun wurde die Lösung langsam erwärmt und während der Erwärmung mit 0,5 kg Ammoniumperoxosulfat versetzt. Bei 70°C setzte die Polymerisation ein. Während der Polymerisation wurde in etwa diese Temperatur beibehalten.

Das abgebundene Gel wurde in einen Schneckenextruder gegeben. Der Ausgang des Extruders wurde mit einer 4-mm-Rundlochplatte versehen. Erhalten wurde ein Granulat mit einem Durchmesser von 4 mm.

Das Granulat wurde in fliessendem Wasser gewaschen, um Monomeranteile zu entfernen. Das Waschwasser wurde übrigens für den folgenden Gelierprozess verwendet.

Nach dem Auswaschen wurde das Granulat in einem Warmluftkanal mit einer Lufttemperatur von 90 bis 100°C getrocknet.
Die Endfeuchtigkeit des Granulats lag zwischen 2 und 3 Gew.-%.
Eine Analyse des freien Monomergehaltes ergab einen Wert von
unter 0,05 Gew.-%.

Das erfindungsgemäss hergestellte Polymermaterial weist also
die folgenden, wesentlichen physikalischen Eigenschaften auf:

- Eine Dichte von $1,0 \pm 0,2$ g·cm$^{-3}$
- eine Wasseraufnahme im Zylindertest von mindestens 200
  Vol.-%,
- einen Gehalt an Acrylamidmonomeren von maximal 0,1 Gew.-%
  und
- eine Verminderung der Wasseraufnahmefähigkeit von höchstens
  10 % - bezogen auf die Anfangsfähigkeit - nach 4 Zyklen
  im Absorptions-Trocknungs-Test.

Der Zylindertest, mit dem die Wasseraufnahme des erfindungsgemässen Polymermaterials zu messen ist, wird folgendermassen
ausgeführt:

Je 10 cm$^3$ Polymermaterial mit Korngrössengrenzen bis 1 mm
(G 01 H), 1-2 mm (G 12 H) und 2-3 mm (G 30 H) werden in
einen gradierten Glaszylinder von 500 cm$^3$ Inhalt gegeben.
Nun wird mit destilliertem Wasser auf 500 cm$^3$ aufgefüllt.
Nach 60 Minuten wird - wie vordem bei verschiedenen Zwischenzeiten - das Gelvolumen bestimmt. Die Versuchstemperatur
soll $25 \pm 1$°C betragen und die Wasseraufnahme in Vol.-%
berechnet sich zu

$$\text{Wasseraufnahme (\%)} = \frac{[V_{\text{Gel,nach 60 Min.}} (\text{cm}^3) - V_{\text{trock.Polymermat.}} (\text{cm}^3)] \cdot 100}{V_{\text{trock.Polymermat.}} (\text{cm}^3)}$$

Die Resultate der Untersuchungen mit Proben der obigen Korngrössen sind in der beigelegten Zeichnung dargestellt.

Die Verminderung der Wasseraufnahme des erfindungsgemässen
Polymermaterials nach einer gegebenen Anzahl Wasseraustausche
ergibt sich mittels der folgenden Untersuchung:

Je gleiche Gewichte Quarzsand der Korngrösse 0,1-0,3 mm
und Korngrösse 0,8-1,2 mm werden miteinander zu einem
Standardsand gemischt.

In je 400 g Standardsand wurden jeweils 6 g Polymermaterial
der obigen Korngrössen zugemischt.

Zyklus 1: Wasseraufnahme in Bechergläser von 115 ml Höhe,
90 ml Durchmesser und 600 cm$^3$ Inhalt (50 cm$^3$ Einteilung)
wurden am äusseren Rand des konkaven Bodens 6 symmetrisch
angeordnete Löcher mit einem Durchmesser von 1,2 mm gebohrt.
Pro Ansatz wurden 6 solcher Bechergläser gefüllt. Der erste
Ansatz bestand nur aus 400 g Standardsand. Die Versuchsproben
enthielten neben dem Sand je 6 g des zu untersuchenden Polymermaterials. Alle Bechergläser wurden nun in ein flaches
Plastikbecken gegeben. Mit Wasser von 22-24$^o$C wurde nun
sowohl das Becken wie auch die Bechergläser auf die 600 cm$^3$
Markierung aufgefüllt. Nun verblieben alle Proben 60 Minuten
lang im Wasser, um eine volle Absorption zu gewährleisten.
Nach 60 Minuten wurden die Proben aus dem Wasserbecken entnommen und auf einen Rost gestellt, wo überflüssiges, d.h.
nicht absorbiertes Wasser abtropfen konnte. Nach Ablauf
einer Abtropfzeit von 60 Minuten wurden die Proben gewonnen.

Die Menge absorbierten Wassers wurde gemäss der obigen
Berechnungsweise festgestellt.

Zyklus 2: Trocknung

Die Proben wurden 16 Stunden lang bei 100°C in Luft getrocknet und dann gewogen. Die erwähnten Muster ergaben die
folgenden Werte:

|            | G 01 H | G 12 H | G 30 H |
|------------|--------|--------|--------|
| 1. Zyklus  | 242,4  | 265,6  | 287,1  |
| 2. Zyklus  | 247,3  | 253,5  | 269,1  |
| 3. Zyklus  | 245,2  | 246,4  | 258,4  |
| 4. Zyklus  | 236,6  | 243,7  | 258,5  |

Die Verwendung des neuen Polymermaterials liegt überraschenderweise im agrotechnischen Gebiet: nicht kultivierbare
Böden, wie Wüsten- bzw. Steppenböden, können urbanisiert
werden, aber auch Intensivkulturböden können damit stabilisiert werden.

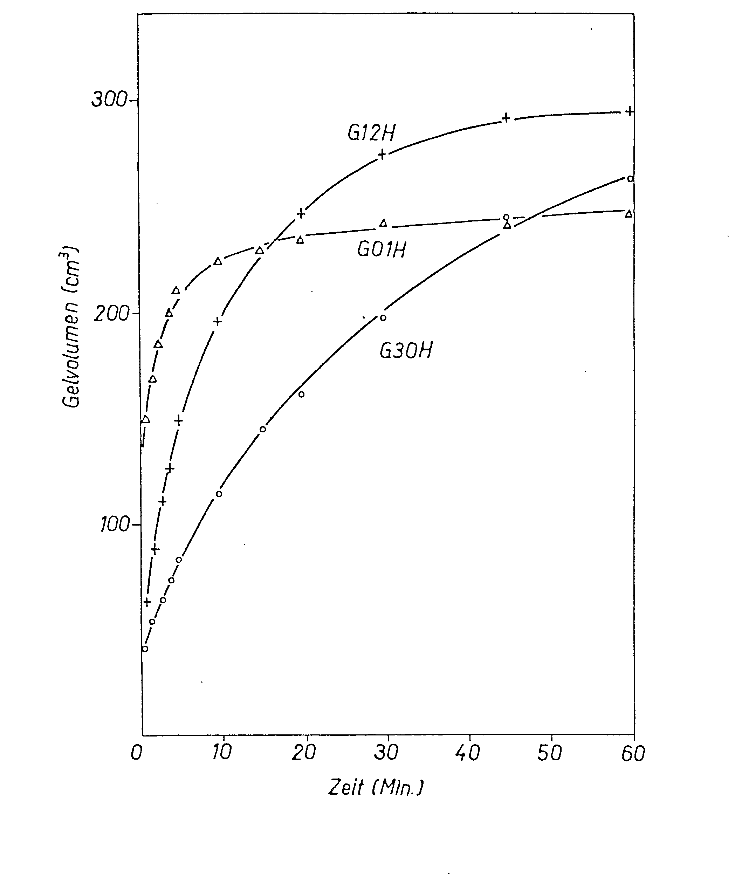

Patentansprüche

1. Verfahren zur kontrollierten Copolymerisation von Acrylamid und N,N'-Methylenbisacrylamid zu wasseraustauschendem, nicht-toxischem Polymermaterial, dadurch gekennzeichnet, dass

- Acrylamid und N,N'-Methylenbisacrylamid zusammen in Wasser im Gewichtsverhältnis Monomere zu Wasser von höchstens 2:8 gelöst werden,

- gegebenenfalls weitere N-substituierte Acrylamidmonomere zugesetzt werden, wobei das obige Gewichtsverhältnis von Monomere zu Wasser nicht überschritten wird,

- der Lösung unter Rühren mindestens ein feinverteilter, aufgeschlämmter und/oder gelöster Polymerisationsinitiator zugesetzt wird,

- die Copolymerisation bei Temperaturen über 50°C durchgeführt wird,

- das Gel granuliert und auf einen maximalen Acrylamidmonomerengehalt von $\leq$ 0,1 Gew.-% - bezogen auf das Endprodukt - gewaschen wird und

- das Gelgranulat bei Temperaturen unterhalb 100°C auf einen maximalen Wassergehalt von 12 Gew.-% - bezogen auf das Endprodukt - getrocknet wird, wobei die Copolymerisation zu Ende verläuft.

2. Verfahren gemäss Patentanspruch 1, dadurch gekennzeichnet, dass Acrylamid und N,N'-Methylenbisacrylamid im Gewichtsverhältnis von 9:1 bis 99:1 und die Monomere und das Wasser im Gewichtsverhältnis von 1:9 eingesetzt werden.

3. Verfahren gemäss Patentanspruch 1, dadurch gekennzeichnet, dass als Polymerisationsinitiatoren tertiäre Amine, wie beispielsweise Triäthanolamin oder 3-Dimethylaminpropionitril und/oder anorganische Peroxoverbindungen im Gewichtsverhältnis Monomere zu Polymerisationsinitiatoren von 9:1 bis 99:1 zugesetzt werden.

4. Verfahren gemäss Patentanspruch 1, dadurch gekennzeichnet, dass die Polymerisation bei $70 \pm 5^{\circ}C$ durchgeführt wird.

5. Verfahren gemäss Patentanspruch 1, dadurch gekennzeichnet, dass das Gelgranulat auf 0,05 Gew.-% Acrylamidmonomergehalt gewaschen wird.

6. Verfahren gemäss Patentanspruch 1, dadurch gekennzeichnet, dass das Gelgranulat mittels Inkontaktbringen desselben mit Luft von $95 \pm 5^{\circ}C$ auf einen Restwassergehalt von 3 Gew.-% - bezogen auf das Endprodukt - getrocknet und so auspolymerisiert wird.

7. Verfahren gemäss Patentanspruch 1, dadurch gekennzeichnet, dass das getrocknete Gelgranulat weiter auf die gewünschte Korngrösse gemahlen und ausgesiebt wird.

8. Wasseraustauschendes, nicht-toxisches Polymermaterial auf Basis von Acrylamid und von N,N'-Methylenbisacrylamid, hergestellt nach dem Verfahren gemäss Patent-

- 12 -

anspruch 1, gekennzeichnet durch

- eine Dichte von $1,0 \pm 0,2$ g·cm$^{-3}$,

- eine Wasseraufnahme im Zylindertest von Minimum 200 Vol.-%,

- einen Gehalt an freien Acrylamidmonomeren von maximal 0,1 Gew.-% und

- eine Verminderung der Wasseraufnahmefähigkeit von höchstens 10 % - bezogen auf die Anfangsfähigkeit - nach vier Zyklen im Absorptions-Trocknungs-Test.

9. Verwendung des wasseraustauschenden, nicht-toxischen Polymermaterials gemäss Patentanspruch 8 zur Urbanisierung von nicht kultivierbaren Böden, wie beispielsweise Wüsten- oder Steppenböden, sowie für die Stabilisierung von Intensivkulturböden, wie z.B. Treibhausböden oder Topfböden.